# EUROPEAN PATENT SPECIFICATION

(11) **EP 1 936 253 B1**
(45) Date of publication and mention of the grant of the patent: **26.10.2011**
(21) Application number: 07122003.2
(22) Date of filing: 30.11.2007
(51) Int. Cl.: F16L 37/252, F02M 35/10

(54) **Sealed connection of tubular sections, particularly for discharging fumes or vapours**
System zum abdichtenden Anschluss von Röhrenabschnitten, insbesondere zur Evakuierung von Rauch oder Dämpfen
Raccord étanche de sections tubulaires en particulier pour l'évacuation de fumées ou de vapeurs

(30) Priority: 21.12.2006 IT PD20060463
(43) Date of publication of application: 25.06.2008
(73) Proprietor: LN 2 S.R.L. a socio unico, 62010 Montecassiano (MC) (IT)
(72) Inventor: Fraticelli, Gabriele, 62011 Cingoli (MC) (IT)
(74) Representative: Fabris, Stefano

(56) References cited:
- FR-A- 746 630
- FR-A- 2 436 931
- US-A- 1 217 805
- US-A- 1 447 949
- US-A- 5 651 732

## Description

The present invention relates to a system for the sealed connection of tubular sections for conveying air-like substances, particularly for conveying and discharging fumes or vapours, having the characteristics stated in the preamble of the principal claim 1.

Systems for the sealed connection of tubular sections having the features outlined above are known from FR 2436931 and US 5651732.

In this specific technical field there is a known way of forming pipes for conveying and extracting fumes or vapours related to combustion process, such as those present in cooking equipment or in fireplaces for room heating, by connecting a plurality of tubular sections for conveying the aforesaid air-like substances to the discharge point, with or without the use of suction means. A typical application is that of suction hoods for combustion vapours or fumes, in which an extraction pipe of this kind is provided to convey to the outside the air-like substances drawn in through the hood.

To enable the tubular pipe to operate correctly, there is also a known way of providing sealing means interposed between pairs of contiguous tubular sections which are connected to each other.

For the connection of the tubular sections, there are also known connection systems of the bayonet type, this system being found to be particularly efficient and quick in the assembly and dismantling of the conveying pipe formed by the joining of a plurality of tubular sections.

One of the main advantages of the aforesaid joining system is that of providing relative speed and ease of assembly for the operator while also providing a reliable connection, in such a way that the tubular sections are joined correctly, particularly in order to provide a hydraulic sealing function, this condition being of particular importance in the case of the conveying and extraction of fumes and other air-like combustion residues from domestic environments.

One of the main objects of the invention is that of providing a system for the sealed connection of tubular sections which is structurally and functionally designed for greater reliability and efficiency in the system for joining the tubular sections together, thus providing an effective response to the aforesaid requirements.

Other features and advantages of the invention will become clear from the following detailed description of a preferred example of embodiment thereof, illustrated, for the purpose of illustration and in a non-limiting way, in the attached drawings, in which:
- Figure 1 is a perspective view of a tubular section designed to be joined to other identical sections by means of the connection system according to the invention,
- Figure 2 is a view in axial section of the tubular section of Figure 1,
- Figure 3 is a view in longitudinal elevation of the tubular section of the preceding figures,
- Figure 4 is a view in front elevation of the tubular section of the preceding figures,
- Figure 5 is a perspective view of two tubular sections placed in axial alignment for connection to each other according to the system of the invention,
- Figures 6 to 9 are schematic partial views, on an enlarged scale, of the steps of the bayonet joining of the sections, shown in sequence.

With reference to the aforesaid figures, the number 1 indicates the whole of a tubular section designed to be joined to other identical tubular sections with the sealed connection system according to the invention, in order to provide a conveying pipe for air-like substances, particularly for the suction and discharge of fumes or vapours.

Each tubular section 1 has a circular cross section and comprises a male end 2a and a female end 2b, axially opposed to each other, which can be engaged with each other and connected together by a bayonet joint as clearly described below.

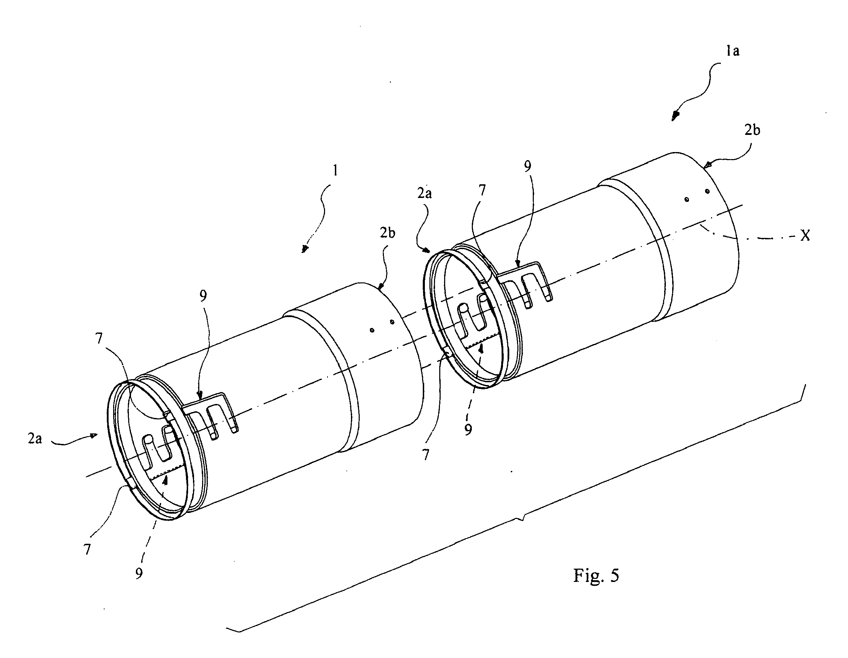

In Figure 5, the number 1a identifies a tubular section structurally identical to the section 1, the said sections being shown in axial alignment along their principal axes, indicated by X, and positioned to be joined by the connection system according to the invention. This system is provided between each pair of tubular sections, to form a tubular pipe by the assembly of a plurality of these tubular sections. Clearly, the connection system according to the invention can be provided on tubular sections whose extension is either straight (of the type described and illustrated herein) or curved (curved sections having a specified angle between the ends), in order to meet a wide variety of requirements for the assembly of the whole conveying pipe to be formed for a specific application.

Starting from the free end of the male end 2a of the tubular section, there are identified, in sequence, a first tubular portion 3, extending into a second coaxial portion 4, of smaller diameter than the portion 3, the portion 4 being extended, in turn, into a third tubular portion 5, whose diameter is substantially equal to that of the portion 3. The third tubular portion 5 then extends over the main part of the tubular section 1 and is extended into a fourth portion 6 in which the female end part 2b of the section 1 is identified.

In the first portion 3, which has a small axial extension, there is formed a pair of opposing channels 7, extending axially (parallel to the axis X) from diametrically opposed ends, in the outer cylindrical surface of the tubular section, indicated by 2d. Each channel 7 is open at its opposed axial ends, thus forming a guide means for corresponding projections 8 formed in the female end 2b. More specifically, the channels 7 of one tubular section can be engaged slidably by the projections 8 of an adjacent tubular section, when one section is fitted into the other, before the bayonet joining of the sections. In other words, during the fitting step, the engagement of the projections in the channels advantageously enables one section to be orientated in a guided and predetermined way with respect to the adjacent section being joined to it.

Two corresponding pairs of projections, in the form of substantially cylindrical appendages projecting from the inner surface of the tubular section, indicated by 2c, are conveniently provided in the female end 2b. Each pair of appendages is provided along a generatrix of the section, the generatrices extending so that they are diametrically opposed.

The projections 8 act as guide means for the uniquely orientated fitting of one section into another section contiguous to it, and also form the connecting elements of the bayonet joint, and are therefore intended to interact with the corresponding grooves 9 provided in a corresponding position at the male end 2a of the tubular section.

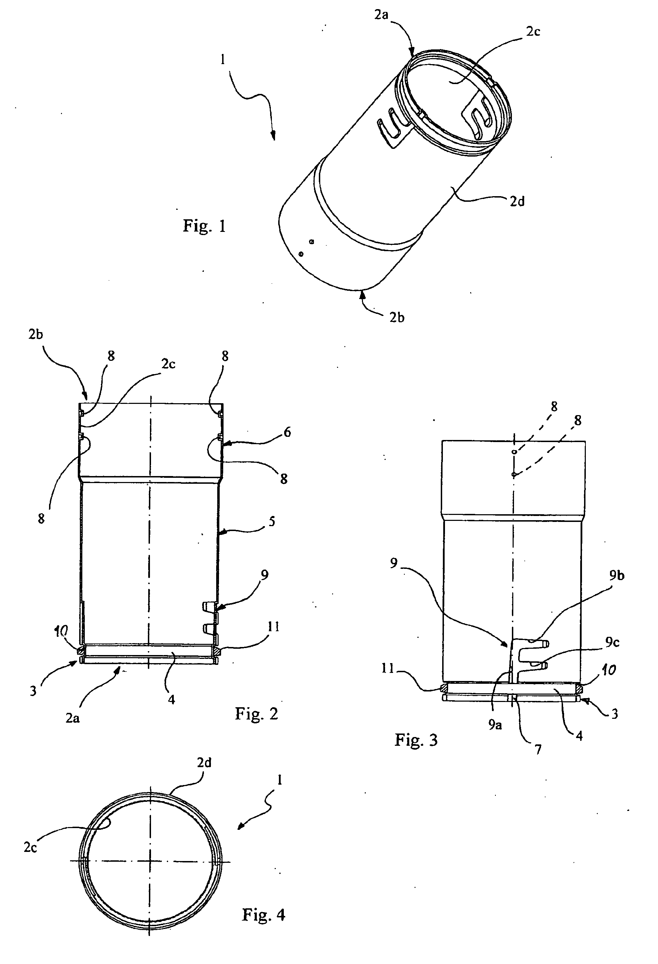

Each groove 9 is formed in the tubular section 5, in a position facing the channels of the portion 3, and comprises a first groove branch 9a extending axially in the surface 2d, from which two branches 9b and 9c extend transversely, these two branches being substantially parallel to and separated from each other, as clearly shown in Figure 3, forming an overall "F" shape of the groove.

The positioning and the separation between the branches of the groove 9b and 9c are determined so as to enable the corresponding pair of projections 8 to engage in them during the relative rotation of the tubular sections, to form the bayonet joint of the sections.

In the tubular portion 4, which has a smaller diameter than the portions 3 and 5, a circumferential seat 10 is delimited for housing a sealing element 11, of the lip type for example. The radial projection of this seal is determined in such a way as to ensure an adequate sealed contact between the facing inner and outer cylindrical surfaces of corresponding tubular sections joined together, when the bayonet connection between the sections is complete.

The shape of the sealing element is also determined in such a way that the element can be ridden over by the projections 8 when the sections are fitted together, without impeding the sliding of the sections relative to each other, and can then provide a hydraulic seal between the sections when the bayonet joint is formed (with the engagement of the projections 8 in the branches of the groove 9b and 9c) as a result of the relative rotation between the sections, which follows the axial fitting step.

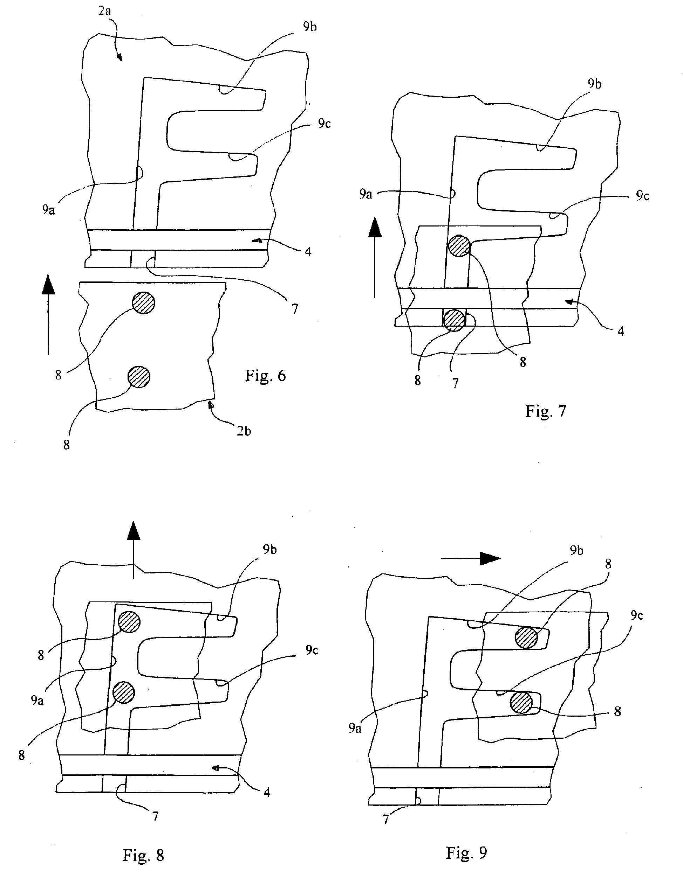

To ensure a correct retaining and locking action between the sections, the projections 8 are made with dimensions such that they engage with the corresponding grooves 9 with a limited radial play and are also retained by interference with the free ends of the branches of the groove 9b and 9c (Figure 9) on completion of the joint, thus ensuring that the sections are locked to each other.

A limited radial play is also provided between the channels 7 and the projections 8 slidably received in them, in order to facilitate the guide function during the orientated fitting of the contiguous tubular sections into each other. With particular reference to Figures 6 to 9, the sequence of relative movements between the tubular sections being joined to each other is shown schematically. In an initial position, the sections are aligned with each other and the correct orientation between the tubular sections is easily identified by means of the matching of the channels with the corresponding projections in sliding engagement with each other. The subsequent axial sliding for fitting the male end into the female end, guided by the slidable engagement of the projections in the channel and in the axial branch of the groove, brings the sections into the configuration of Figure 8. From this position, the projections are guided to engage slidably with the corresponding branches 9b and 9c of the grooves 9, by a relative rotation of the sections (about the axis X), until they bear on the ends of these grooves, thus forming the bayonet joint shown schematically in Figure 9.

Thus the invention achieves the proposed objects while yielding numerous advantages by comparison with the known solutions.

In the first place, the provision of guide means and counter-means which interact with each other during the fitting of the sections makes the joining system fast and secure, since it provides the operator with a correct relative orientation between the tubular sections.

Moreover, the provision in each groove of a double branch of the groove which can be engaged by a corresponding pair of projections gives the bayonet joining system greater efficiency during joining and in the retention of the tubular section with a hydraulic sealed lock.

## Claims

1. A system for the sealed connection of tubular sections (1) for conveying air-like substances, particularly for conveying fumes or vapours for discharge, in which each section comprises a male end (2a) and a female end (2b) axially opposed to each other, each male end (2a) of one section being capable of being joined by fitting into the female end (2b) of an adjacent tubular section, the said male and female ends (2a, 2b) being connectable to each other by bayonet connection means comprising corresponding guide means and counter-means (7, 8) on the said male and female ends (2a, 2b) of each section, to guide the joining of two adjacent tubular sections to each other by axial fitting, such that the male end (2a) of one tubular section can be received in the corresponding female end (2b) of an adjacent tubular section with a substantially unique relative orientation of the tubular sections being joined together, said means and counter-means comprising at least one channel (7) extending axially at the said male end (2a) of the tubular section, and at least one projection (8) formed at said female end (2b) of the said tubular section, the said at least one projection (8) being slidably engageable in the said at least one channel (7) during the fitting of the male end (2a) into the corresponding female end (2b) of adjacent tubular sections being joined together, said at least one channel (7) being open at its opposed axial ends, in such a way that the at least one projection (8) is slidably guided axially in the channel (7), during the fitting, from one end of the channel until it passes beyond the opposite end of the channel (7), causing the disengagement of the guide means and counter-means for the subsequent bayonet connection of the tubular sections, the said at least one projection (8) forming one of the connecting elements of the bayonet connection, the other connecting element comprising a groove (9) with at least a first axial branch (9a) extended into a second branch (9b) transverse to the first, to provide the retaining action of the bayonet connection as a result of the slidable engagement of the said projection (8) in the groove (9) along the first and second branches (9a, 9b), **characterized in that** a circumferential seat (10) is formed between a portion (3) of the tubular section in which the channel (7) is formed and a portion (5) in which the groove (9) is formed, to house a sealing element (11) for ensuring a hydraulic seal between the contiguous tubular sections which are joined together.

2. A system according to Claim 1, in which the said sealing element (11) has dimensions such that, in the axial fitting movement of the tubular sections with respect to each other, the projection (8) is guided into the channel (7) until it rides over this sealing element (11), thus disengaging from the channel (7) and then engaging with the first branch (9a) of the groove (9) and subsequently, as a result of the relative rotary movement between the tubular section, engaging with the corresponding transverse branch (9b) of the groove (9), thus providing the bayonet connection.

3. A system according to claim 1 or 2, in which at least a pair of projections (8), extending from corresponding diametrically opposed parts at the relative end of the corresponding tubular section, is provided.

4. A system according to Claim 3, in which the first branch (9a) of the at least one groove (9) is elongated in the direction of longitudinal extension of the at least one channel (7) and is axially separated from the free end of the said channel (7).

5. A system according to one of Claims 3 or 4, in which a pair of grooves (9), extending from diametrically opposite parts of the male end (2a) of the tubular section, is provided, each groove (9) being engageable by one of the said projections (8) extending from a corresponding position in the female end (2b).

6. A system according to Claim 5, in which a second pair of projections (8) is provided, each projection (8) of the said second pair being axially separated from a corresponding projection (8) of the first pair along the same generatrix of the tubular section, each groove (9) comprising a third branch (9c) transverse to the first branch (9a) and parallel to and separated from the second branch (9b), the said third branch (9c) of the groove (9) being engageable by the corresponding projection (8) of the said second pair of projections (8), in order to form a double bayonet connection in each groove (9).

7. A system according to any one of the preceding claims, in which each tubular section is delimited by an outer surface (2d) and an inner surface (2c), each groove (9) being formed on the outer surface (2d) of the male end (2a) of the tubular section, each corresponding projection (8) extending from the inner surface (2c) of the female end (2b) of the tubular section.

8. A system according to any one of the preceding claim 6, in which the said projection (8) has a substantially cylindrical shape, with a diameter such that the axial guide channel (7) and the first branch (9a) of the groove (9) are engaged with limited radial play, and such that the projection (8) is retained by friction by the free ends of the second and third branches (9b, 9c) of the groove, thus providing an axial lock between the sections connected by the bayonet connection.

## Patentansprüche

1. System zum abdichtenden Verbinden von Rohrabschnitten (1) zum Leiten von luftähnlichen Substanzen, insbesondere zum Leiten und Abführen von Rauchgasen oder Dämpfen, in dem jeder Abschnitt ein männliches Ende (2a) und ein weibliches Ende (2b) umfasst, die einander axial gegenüber stehen, wobei jedes männliche Ende (2a) eines Abschnitts dazu ausgebildet ist, dass es durch Einsetzen in das weibliche Ende (2b) eines angrenzenden Rohrabschnitts angefügt wird, wobei die männlichen und weiblichen Enden (2a, 2b) durch Bajonett-Verschlussmittel, die zugeordnete Führungsmittel und Gegenstückmittel (7, 8) auf dem männlichen und weiblichen Ende (2a, 2b) jedes Abschnitts umfassen, miteinander verbindbar sind, um das Anfügen von zwei angrenzenden Rohrabschnitten aneinander durch axiales Einsetzen derart zu führen, dass das männliche Ende (2a) eines Rohrabschnitts im zugeordneten weiblichen Ende (2b) eines angrenzenden Rohrabschnitts im Wesentlichen mit einer eigenen zugehörigen Orientierung der zusammengefügten Rohrabschnitte aufgenommen werden kann, wobei die Mittel und Gegenstückmittel mindestens einen Kanal (7), der sich axial am männlichen Ende (2a) des Rohrabschnitts erstreckt, und mindestens einen Vorsprung (8), der am weiblichen Ende (2b) des Rohrabschnitts ausgebildet ist, umfassen, wobei der mindestens eine Vorsprung (8) beim Einsetzen des männlichen Endes (2a) in das zugeordnete weibliche Ende (2b) von zusammengefügten angrenzenden Rohrabschnitten verschiebbar in den mindestens einen Kanal (7) einrückbar ist, wobei der mindestens eine Kanal (7) an seinen gegenüberliegenden axialen Enden in einer Weise offen ist, dass beim Einsetzen der mindestens eine Vorsprung (8) im Kanal (7) von einem Ende des Kanals, bis er über das gegenüberliegende Ende des Kanals (7) hinauskommt, verschiebbar axial geführt ist, was ein Lösen der Führungsmittel und Gegenstückmittel für den nachfolgenden Bajonett-Verschluss der Rohrabschnitte bewirkt, wobei der mindestens eine Vorsprung (8) eines der Verbindungselemente des Bajonett-Verschlusses bildet, wobei das andere Verbindungselement eine Nut (9) mit mindestens einer ersten axialen Abzweigung (9a) umfasst, die sich in eine zweite Abzweigung (9b) quer zu der ersten erstreckt, so dass eine Haltewirkung des Bajonett-Verschlusses als Folge des verschiebbaren Einrückens des Vorsprungs (8) in die Nut (9) entlang der ersten und zweiten Abzweigung (9a, 9b) erreicht wird, **dadurch gekennzeichnet, dass** eine umlaufende Aufnahme (10) ausgebildet ist zwischen einem Teilbereich (3) des Rohrabschnitts, in dem der Kanal (7) ausgebildet ist, und einem Teilbereich (5), in dem die Nut (9) ausgebildet ist, um ein Dichtungselement (11) aufzunehmen, so dass eine hydraulische Abdichtung zwischen den anliegenden Rohrabschnitten, die zusammengefügt sind, gewährleisten ist.

2. System nach Anspruch 1, bei dem das Dichtungselement (11) so bemessen ist, dass bei der axialen Einsetzbewegung der Rohrabschnitte zueinander der Vorsprung (8) in den Kanal (7) geführt wird, bis er über dieses Dichtungselement (11) läuft, so dass er sich auf diese Weise vom Kanal (7) löst und dann bei der ersten Abzweigung (9a) der Nut (9) einrückt und anschließend als Folge der zugehörigen Drehbewegung zwischen dem Rohrabschnitt, bei der zugeordneten Querabzweigung (9b) der Nut (9) einrückt, um so den Bajonett-Verschluss auszubilden.

3. System nach Anspruch 1 oder 2, bei dem mindestens ein Paar Vorsprünge (8), die sich von zugeordneten diametral gegenüberliegenden Teilen am zugehörigen Ende des zugeordneten Rohrabschnitts erstrecken, ausgebildet ist.

4. System nach Anspruch 3, bei dem die erste Abzweigung (9a) der mindestens einen Nut (9) in Richtung der Längserstreckung des mindestens einen Kanals (7) verlängert ist und vom freien Ende des Kanals (7) axial getrennt ist.

5. System nach Anspruch 3 oder 4, bei dem ein Paar Nuten (9), die sich von diametral gegenüberliegenden Teilen des männlichen Endes (2a) des Rohrabschnitts erstrecken, ausgebildet ist, wobei in jede Nut (9) einer der Vorsprünge (8) einrücken kann, die sich von einer zugeordneten Position im weiblichen Ende (2b) erstrecken.

6. System nach Anspruch 5, bei dem ein zweites Paar Vorsprünge (8) ausgebildet ist, wobei jeder Vorsprung (8) in dem zweiten Paar axial von einem zugeordneten Vorsprung (8) des ersten Paars entlang der gleichen Mantellinie des Rohrabschnitts getrennt ist, wobei jede Nut (9) eine dritte Abzweigung (9c) quer zu der ersten Abzweigung (9a) und parallel zu und getrennt von der zweiten Abzweigung (9b) umfasst, wobei in die dritte Abzweigung (9c) der Nut (9) der zugeordnete Vorsprung (8) des zweiten Paars Vorsprünge (8) einrücken kann, um einen doppelten Bajonett-Verschluss in jeder Nut (9) auszubilden.

7. System nach einem der vorhergehenden Ansprüche, bei dem jeder Rohrabschnitt durch einen Außenfläche (2d) und einen Innenfläche (2c) begrenzt ist, wobei jede Nut (9) auf der Außenfläche (2d) des männlichen Endes (2a) des Rohrabschnitts ausgebildet ist und jeder zugeordnete Vorsprung (8) sich von der Innenfläche (2c) des weiblichen Endes (2b) des Rohrabschnitts erstreckt.

8. System nach Anspruch 6, bei dem der Vorsprung (8) eine im Wesentlichen zylindrische Form aufweist, mit einem solchen Durchmesser, dass der axiale Führungskanal (7) und die erste Abzweigung (9a) der Nut (9) mit begrenztem radialen Spiel in Eingriff sind, und derart, dass der Vorsprung (8) durch Reibschluss der freien Enden der zweiten und dritten Abzweigung (9b, 9c) der Nut gehalten ist, so dass auf diese Weise eine axiale Arretierung zwischen den durch den Bajonett-Verschluss verbundenen Abschnitten ausgebildet ist.

## Revendications

1. Système pour la connexion étanche de tronçons tubulaires (1) destinés au transport de substances analogues à de l'air, particulièrement pour le transport de fumées ou de vapeurs pour leur évacuation, dans lequel chaque tronçon comprend une extrémité mâle (2a) et une extrémité femelle (2b) axialement opposées l'une à l'autre, chaque extrémité mâle (2a) d'un tronçon étant capable d'être jointe par engagement dans l'extrémité femelle (2b) d'un tronçon tubulaire adjacent, lesdites extrémités mâle et femelle (2a, 2b) pouvant être connectées l'une à l'autre par des moyens de connexion à baïonnette comprenant des moyens de guidage et des moyens antagonistes correspondants (7, 8) sur lesdites extrémités mâle et femelle (2a, 2b) de chaque tronçon, pour guider la jonction de deux tronçons tubulaires adjacents l'un à l'autre par engagement axial, de telle façon que l'extrémité mâle (2a) d'un tronçon tubulaire peut être reçue dans l'extrémité femelle correspondante (2b) d'un tronçon tubulaire adjacent avec une orientation relative sensiblement unique des tronçons tubulaires qui sont joints l'un à l'autre, lesdits moyens et lesdits moyens antagonistes comprenant au moins un canal (7) s'étendant axialement à ladite extrémité mâle (2a) du tronçon tubulaire, et au moins une projection (8) formée à ladite extrémité femelle (2b) dudit tronçon tubulaire, ladite au moins une projection (8) pouvant être engagée en coulissement dans ledit au moins un canal (7) pendant l'engagement de l'extrémité mâle (2a) dans l'extrémité femelle correspondante (2b) de tronçons tubulaires adjacents qui sont joints l'un à l'autre, ledit au moins un canal (7) étant ouvert à ses extrémités axiales opposées de telle façon que ladite au moins une projection (8) est guidée axialement en coulissement dans le canal (7), pendant l'engagement, depuis une extrémité du canal jusqu'à ce qu'elle passe au-delà de l'extrémité opposée du canal (7), entraînant le désengagement des moyens de guidage et des moyens antagonistes pour la connexion à baïonnette consécutive des tronçons tubulaires, ladite au moins une projection (8) formant l'un des éléments de connexion de la connexion à baïonnette, l'autre élément de connexion comprenant une gorge (9) avec au moins une première ramification axiale (9a) qui se prolonge dans une seconde ramification (9b) transversale à la première, pour assurer l'action de retenue de la connexion à baïonnette en résultat de l'engagement en coulissement de ladite projection (8) dans la gorge (9) le long de la première et de la seconde ramification (9a, 9b), **caractérisé en ce qu'**un siège circonférentiel (10) est formé entre une portion (3) du tronçon tubulaire dans lequel le canal (7) est formé et une portion (5) dans laquelle la gorge (9) est formée, pour abriter un élément d'étanchéité (11) pour assurer un joint hydraulique entre les tronçons tubulaires contigus qui sont joints ensemble.

2. Système selon la revendication 1, dans lequel ledit élément d'étanchéité (11) a des dimensions telles que, dans le mouvement d'engagement axial des tronçons tubulaires l'un par rapport à l'autre, la projection (8) est guidée dans le canal (7) jusqu'à ce qu'elle passe pardessus cet élément d'étanchéité (11), en se dégageant ainsi depuis le canal (7) puis en s'engageant dans la première ramification (9a) de la gorge (9) et ultérieurement, en résultat du mouvement rotatif relatif entre les tronçons tubulaires, en s'engageant dans la ramification transversale correspondante (9b) de la gorge (9), assurant ainsi la connexion à baïonnette.

3. Système selon la revendication 1 ou 2, dans lequel il est prévu au moins une paire de projections (8), qui s'étendent depuis des parties correspondantes diamétralement opposées à l'extrémité relative du tronçon tubulaire correspondant.

4. Système selon la revendication 3, dans lequel la première ramification (9a) de ladite au moins une gorge (9) est allongée dans la direction d'extension longitudinale dudit au moins un canal (7), et est axialement séparée depuis l'extrémité libre dudit canal (7).

5. Système selon l'une des revendications 3 ou 4, dans lequel il est prévu une paire de gorges (9), s'étendant depuis des parties diamétralement opposées de l'extrémité mâle (2a) du tronçon tubulaire, chaque gorge (9) pouvant être engagée par l'une desdites projections (8) s'étendant depuis une position correspondante dans l'extrémité femelle (2b).

6. Système selon la revendication 5, dans lequel il est prévu une seconde paire de projections (8), chaque projection (8) de ladite seconde paire étant axialement séparée d'une projection correspondante (8) de la première paire le long de la même génératrice du tronçon tubulaire, chaque gorge (9) comprenant une troisième ramification (9c) transversale à la première ramification (9a) et parallèle à et séparée de la seconde ramification (9b), ladite troisième ramification (9c) de la gorge (9) pouvant être engagée par la projection correspondante (8) de ladite seconde paire de projections (8), afin de former une connexion à double baïonnette dans chaque gorge (9).

7. Système selon l'une quelconque des revendications précédentes, dans lequel chaque tronçon tubulaire est délimité par une surface extérieure (2d) et par une surface intérieure (2c), chaque gorge (9) étant formée sur la surface extérieure (2d) de l'extrémité mâle (2a) du tronçon tubulaire, chaque projection correspondante (8) s'étendant depuis la surface intérieure (2c) de l'extrémité femelle (2b) du tronçon tubulaire.

8. Système selon la revendication 6, dans lequel ladite projection (8) a une forme sensiblement cylindrique, avec un diamètre tel que le canal de guidage axial (7) et la première ramification (9a) de la gorge (9) sont engagés avec un jeu radial limité, et tel que ladite projection (8) est retenue par friction par les extrémités libres de la seconde et de la troisième ramification (9b, 9c) de la gorge, assurant ainsi un blocage axial entre les tronçons connectés par la connexion à baïonnette.
